# FASCICULE DE BREVET EUROPEEN

(11) **EP 1 308 023 B1**
(45) Date de publication et mention de la délivrance du brevet: **09.11.2005**
(21) Numéro de dépôt: 01963089.6
(22) Date de dépôt: 10.08.2001
(51) Int. Cl.: H04M 3/493

(54) **PROCEDE ET INSTALLATION D'INTERROGATION TELEPHONIQUE**
FERNSPRECHABFRAGEVERFAHREN UND GERÄT
METHOD AND INSTALLATION FOR TELEPHONE INQUIRY

(30) Priorité: 11.08.2000 FR 0010558
(43) Date de publication de la demande: 07.05.2003
(73) Titulaire: Massoud, Nadim, 29600 Marbella (ES)
(72) Inventeur: Massoud, Nadim, 29600 Marbella (ES)
(74) Mandataire: Laget, Jean-Loup
(86) Numéro de dépôt international: PCT/FR2001/002594
(87) Numéro de publication internationale: WO 2002/015545

(56) Documents cités:
- WO-A-98/48562
- PATENT ABSTRACTS OF JAPAN vol. 016, no. 307 (E-1229), 7 juillet 1992 (1992-07-07) & JP 04 086053 A (MATSUSHITA ELECTRIC IND CO LTD), 18 mars 1992 (1992-03-18)

## Description

La présente invention concerne le domaine général des interrogations téléphoniques, par exemple pour la consultation de programmes (cinéma, théâtre, etc.), d'horaires (avion, train, etc.), de tarifs, ou similaires et optionnellement pour la passation de commandes ou de réservations.

Les interrogations téléphoniques classiques sont longues, fastidieuses et coûteuses et, en outre, ne permettent la passation de commandes que par un processus de communication de codes, par exemple de cartes de crédit, qui peut être dangereux pour l'utilisateur. Elles sont en général soumises à des horaires fixes qui sont souvent malcommodes.

La réponse à des interrogations téléphoniques par un message enregistré ne supprime pas les inconvénients précédents, si ce n'est qu'elle remplace le coût d'une personne pour répondre par une installation de diffusion de messages qui peut être consultée à tout instant.

Le développement rapide des techniques de communication rend nécessaire de pouvoir disposer de systèmes d'interrogations téléphoniques et optionnellement de passation d'ordres qui soient instantanés, gratuits et de maniement extrêmement simple et commode pour l'interrogation.

Le document WO 98-48562 décrit un procédé de communication entre un appelant et un appelé. L'appelant appelle un numéro de téléphone et l'appelé reçoit l'appel mais n'y répond pas, et définit un message à partir du code de communication.

Le document JP 04-086053 décrit un procédé de communication entre un appelant et un appelé. L'appelant appelle un numéro de téléphonent laisse sonner la sonnerie d'appel un certain nombre de fois. L'appelé ne répond pas mais, en fonction du nombre de sonneries, définit un message qui est affiché sans qu'une communication soit établie.

La présente invention vise à fournir un tel système.

A cet effet selon un premier aspect de l'invention, celle-ci a pour objet un procédé d'interrogation téléphonique d'un centre récepteur, dans lequel l'interrogateur compose un numéro de téléphone dudit centre récepteur au moyen d'un appareil fixe ou mobile capable de recevoir des données, via un réseau téléphonique ou de transmission de données, il laisse sonner la sonnerie du téléphone appelé un nombre de fois déterminé, le centre récepteur identifie le numéro d'appel de l'interrogateur et le nombre de sonneries avant que l'interrogateur interrompe son appel, caractérisé en ce que le centre récepteur appelle automatiquement le numéro d'appel de l'interrogateur et transmet une réponse audible ou visible sur ledit appareil fixe ou mobile, ladite réponse correspondant au nombre de sonneries déterminé.

Le procédé selon l'invention offre une possibilité de réponse automatique quasi immédiate à une interrogation, sans aucun coût pour l'interrogateur, que le numéro de téléphone appelé soit gratuit ou payant, puisque ledit téléphone appelé n'est pas décroché et qu'aucune communication n'est établie.

Selon une forme de mise en oeuvre du procédé selon l'invention, la réponse transmise par le centre récepteur contient au moins un numéro téléphonique de réservation et/ou de passation de commande, l'interrogateur compose ce numéro téléphonique et laisse sonner la sonnerie de téléphone appelé un nombre prédéterminé de fois, correspondant à une commande, le centre récepteur, identique ou différent, identifie le numéro téléphonique appelant et le nombre de sonneries, appelle le numéro téléphonique appelant et lui transmet automatiquement une confirmation de commande sous forme audible ou visible.

L'invention a également pour objet, selon un second aspect, une installation pour la mise en oeuvre du procédé précédent.

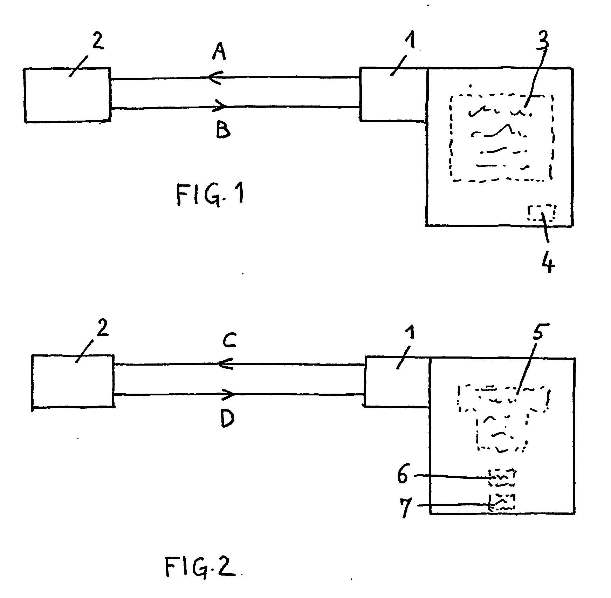

L'invention sera bien comprise à la lecture de la description suivante d'un exemple de réalisation, en référence au dessin annexé dont les figures 1 et 2 sont des schémas par blocs illustrant le procédé de l'invention.

L'interrogateur ou client dispose d'un terminal, par exemple appareil 1 mobile ou fixe, tel qu'un téléphone fixe ou mobile, agencé pour recevoir des données via un réseau téléphonique ou de transmission de données. Il dispose d'une liste de cinémas auxquels est assigné respectivement un numéro de téléphone gratuit ou payant dans un pays quelconque.

L'interrogateur compose le numéro assigné au cinéma qu'il a choisi (appel A) et laisse sonner le téléphone une fois, par exemple s'il souhaite recevoir le programme en français, deux fois s'il souhaite recevoir le programme en anglais, etc.) puis il raccroche. Cet appel est donc gratuit, que le téléphone appelé soit gratuit ou payant, que le numéro appelé corresponde à un central local, national ou étranger.

Le centre récepteur 2 appelé est équipé de manière à reconnaître le numéro de téléphone appelant et le nombre de sonneries émises et pour transmettre automatiquement à ce numéro appelant (appel B), dès réception de l'appel, via le réseau téléphonique ou un autre réseau de transmission de données, des données correspondant au numéro de téléphone composé par l'interrogateur et au nombre de sonneries.

Dans l'exemple décrit, l'interrogateur reçoit sur son appareil, sous forme d'un ou plusieurs messages 3 textuels, imagés ou vocaux, les programmes et horaires du cinéma choisi.

Selon une forme de réalisation de l'invention, adaptée pour passer une commande, en l'occurrence une réservation de billets de cinéma, le programme affiché 3 est accompagné d'un numéro de téléphone 4.

L'ensemble de cette procédure est illustré par le schéma par blocs de la figure 1.

L'interrogateur peut alors appeler (appel C) le centre récepteur 2 sur le numéro de téléphone 4 correspondant au programme et à l'horaire choisis. Il laisse sonner une fois, par exemple pour réserver une place, deux fois, par exemple pour réserver deux places, etc. et raccroche. Là encore, son appel est gratuit.

Le centre récepteur 2 appelle (appel D) alors automatiquement le numéro appelant et lui transmet un message de confirmation 5 contenant en particulier un numéro de code 6. La présentation de ce numéro de code à l'entrée du cinéma permet à l'interrogateur d'accéder à la salle pour le nombre de places commandées.

Ce centre récepteur 2 dans la figure 2 est identique au centre récepteur 2 appelé dans la figure 1 mais ce pourrait également être un centre récepteur différent, l'utilisateur appelant un premier centre récepteur qui transmet des données vers l'utilisateur telles que le numéro de téléphone d'un second centre récepteur différent qui prend en charge les réservations.

Pour le règlement, le client a par exemple souscrit à un service de paiement, dans lequel son numéro de téléphone l'identifie, de sorte que le centre récepteur 2', qui peut se connecter automatiquement au centre du service de paiement, est automatiquement crédité du paiement des places réservées, ce paiement étant automatiquement débité sur le compte du client, sans danger de révélation d'un numéro de code. Ainsi, après passation de la commande par l'interrogateur, le centre récepteur 2 émet donc automatiquement un signal de débit vers un centre de service de paiement auquel est abonné l'interrogateur et ledit centre de service de paiement débite le compte de l'interrogateur du montant correspondant à la commande et en crédite le centre récepteur 2. Ces transactions automatiques peuvent être sécurisées de manière simple en ne permettant la connexion au centre du service de paiement et/ou la transaction que de centres récepteurs, tels que le centre récepteur 2, identifiés et abonnés au service de paiement.

En complément, le système peut être équipé pour l'annulation de commandes. Dans ce cas, le message de confirmation de commande 5 comporte également un numéro de téléphone 7 d'annulation. Le client peut appeler ce numéro dans un délai prédéterminé, par exemple jusqu'à 30 minutes avant la projection. En laissant sonner la sonnerie un nombre déterminé de fois, par exemple une seule fois, et en raccrochant, il permet au centre récepteur 2 d'émettre automatiquement un message d'annulation et d'annuler le paiement auprès du service de paiement.

Bien que le procédé et l'installation qui viennent d'être décrits soient illustrés à titre d'exemple à propos de programmes de cinéma, on comprendra qu'ils peuvent être appliqués à de nombreuses formes d'interrogation et de vente.

## Revendications

1. Procédé d'interrogation téléphonique d'un centre récepteur (2), dans lequel l'interrogateur compose un numéro de téléphone dudit centre récepteur (2) au moyen d'un appareil (1) fixe ou mobile capable de recevoir des données (3,4,5,6,7), via un réseau téléphonique ou de transmission de données, il laisse sonner la sonnerie du téléphone appelé un nombre de fois déterminé, le centre récepteur (2) identifie automatiquement le numéro d'appel de l'interrogateur et le nombre de sonneries avant que l'interrogateur interrompe son appel,
**caractérisé en ce que** le centre récepteur (2) appelle automatiquement le numéro d'appel de l'interrogateur et transmet une réponse (3,4,5,6,7) audible ou visible sur ledit appareil (1) fixe ou mobile, ladite réponse correspondant au nombre de sonneries déterminé.

2. Procédé selon la revendication 1,
**caractérisé en ce que** la réponse (3,4) transmise par le centre récepteur (2) contient au moins un numéro téléphonique (4) de réservation et/ou de passation de commande, l'interrogateur compose ce numéro téléphonique et laisse sonner la sonnerie de téléphone appelé un nombre prédéterminé de fois correspondant à une commande, le centre récepteur (2), identique ou différent, identifie le numéro téléphonique appelant et le nombre de sonneries, appelle le numéro téléphonique appelant et lui transmet automatiquement une confirmation de commande (5) sous forme audible ou visible.

3. Procédé selon la revendication 2,
**caractérisé en ce que**, après passation de la commande par l'interrogateur, le centre récepteur (2) émet automatiquement un signal de débit vers un centre de service de paiement auquel est abonné l'interrogateur et ledit centre de service de paiement débite le compte de l'interrogateur du montant correspondant à la commande et en crédite le centre récepteur (2), la communication entre le centre récepteur (2) et le centre de service de paiement étant de préférence sécurisée.

4. Procédé selon l'une des revendications 2 et 3,
**caractérisé en ce que** la confirmation de commande (5) comporte également un numéro de téléphone (7) d'annulation et que, lorsque l'interrogateur appelle, dans un délai prédéterminé, ledit numéro de téléphone (7) d'annulation et laisse sonner la sonnerie un nombre déterminé de fois puis raccroche, le centre récepteur (2) annule automatiquement la commande et émet un message d'annulation à destination de l'interrogateur.

5. Installation pour l'interrogation et/ou l'émission de commandes et le paiement desdites commandes, comprenant un appareil (1) fixé ou mobile agencé pour recevoir des données (3,4,5,6,7) via un réseau téléphonique ou de transmission de données et comprenant des moyens d'appel téléphonique, ainsi qu'un centre récepteur (2) agencé pour reconnaître les appels téléphoniques émis par ledit appareil (1) en direction d'un numéro d'appel dudit centre récepteur (2), et identifier le numéro téléphonique de l'appelant et le nombre de sonneries avant que l'appelant interrompe son appel,
**caractérisé en ce que** ledit centre récepteur (2) comporte des moyens d'appel automatique dudit appareil (1), et de transmission de données (3,4,5,6,7) sous forme d'une réponse audible ou visible sur ledit appareil, ladite réponse correspondant au nombre de sonneries reconnu.

## Patentansprüche

1. Verfahren zur Telefonabfrage eines Empfängerzentrums (2), bei dem der Abfragende eine Telefonnummer des genannten Empfängerzentrums (2) mittels eines festen oder mobilen Geräts (1) wählt, welches Daten (3, 4, 5, 6, 7) über ein Telefon- oder Datenübertragungsnetz empfangen kann, er die Klingel des angerufenen Telefons eine bestimmte Anzahl von Malen klingeln lässt, das Empfängerzentrum (2) die Rufnummer des Abfragenden und die Anzahl der Klingelzeichen automatisch identifiziert, bevor der Abfragende seinen Anruf unterbricht, **dadurch gekennzeichnet, dass** das Empfängerzentrum (2) die Rufnummer des Abfragenden automatisch anruft und eine an dem genannten festen oder mobilen Gerät (1) hörbare oder sichtbare Antwort (3, 4, 5, 6, 7) überträgt, wobei die genannte Antwort der bestimmten Anzahl von Klingelzeichen entspricht.

2. Verfahren nach Anspruch 1, **dadurch gekennzeichnet, dass** die von dem Empfängerzentrum (2) übertragene Antwort (3, 4) mindestens eine Telefonnummer (4) zur Reservierung und/oder Aufgabe einer Bestellung enthält, der Abfragende diese Telefonnummer wählt und die Klingel des angerufenen Telefons eine vorbestimmte, einer Bestellung entsprechende Anzahl von Malen klingeln lässt, das identische oder ein unterschiedliches Empfängerzentrum (2) die anrufende Telefonnummer und die Anzahl der Klingelzeichen identifiziert, die anrufende Telefonnummer anruft und ihr automatisch eine Bestellungsbestätigung (5) in hörbarer oder sichtbarer Form übermittelt.

3. Verfahren nach Anspruch 2, **dadurch gekennzeichnet, dass** nach Aufgabe der Bestellung durch den Abfragenden das Empfängerzentrum (2) automatisch ein Belastungszeichen zu einem Zahlungsdienstzentrum sendet, bei dem der Abfragende Teilnehmer ist, und das genannte Zahlungsdienstzentrum das Konto des Abfragenden mit dem der Bestellung entsprechenden Betrag belastet und diesen dem Empfängerzentrum (2) gutschreibt, wobei die Kommunikation zwischen dem Empfängerzentrum (2) und dem Zahlungsdienstzentrum vorzugsweise gesichert ist.

4. Verfahren nach einem der Ansprüche 2 und 3, **dadurch gekennzeichnet, dass** die Bestellungsbestätigung (5) auch eine Storno-Telefonnummer (7) aufweist und dass, wenn der Abfragende in einer vorbestimmten Frist die genannte Storno-Telefonnummer (7) anruft und die Klingel eine vorbestimmte Anzahl von Malen klingeln lässt und anschließend auflegt, das Empfängerzentrum (2) die Bestellung automatisch storniert und eine Stornonachricht an den Abfragenden sendet.

5. Anlage zur Abfrage und/oder zur Ausgabe von Bestellungen und zur Zahlung der genannten Bestellungen, mit einem festen oder mobilen Gerät (1), welches ausgebildet ist, um Daten (3, 4, 5, 6, 7) über ein Telefon- oder Datenübertragungsnetz zu empfangen, und mit Telefonanruf-Mitteln, sowie mit einem Empfängerzentrum (2), welches ausgebildet ist, um die von dem genannten Gerät (1) zu einer Rufnummer des genannten Empfängerzentrums (2) gesendeten Telefonanrufe zu erkennen und um die Telefonnummer des Anrufenden und die Anzahl der Klingelzeichen bis zur Unterbrechung des Anrufs durch den Anrufenden zu identifizieren, **dadurch gekennzeichnet, dass** das genannte Empfängerzentrum (2) Mittel zum automatischen Anrufen des genannten Geräts (1) und zur Übertragung von Daten (3, 4, 5, 6, 7) in Form einer an dem genannten Gerät hörbaren oder sichtbaren Antwort aufweist, wobei die genannte Antwort der erkannten Anzahl von Klingelzeichen entspricht.

## Claims

1. Method of telephonically intecrogating a reception centre (2), in which method the interrogator dials a telephone number of said reception centre (2) by means of a fixed or mobile apparatus (1) capable of receiving data (3, 4, 5, 6, 7), via a telephone or data transmission network, he lets the telephone called ring out a given number of times, the reception centre (2) automatically identifies the call number of the interrogator and the number of rings before the interrogator interrupts his call, **characterised in that** the reception centre (2) automatically calls the call number of the interrogator and transmits an audible or visible response (3, 4, 5, 6, 7) to said fixed or mobile apparatus (1), said response corresponding to the given number of rings.

2. Method according to claim 1, **characterised in that** the response (3, 4), transmitted by the reception centre (2), contains at least one telephone number (4) for reserving and/or forwarding an order, the interrogator dials this telephone number and lets the telephone called ring out a given number of times corresponding to an order, the reception centre (2), identical or different, identifies the telephone number calling and the number of rings, calls the telephone number calling and automatically transmits thereto an order confirmation (5) in an audible or visible form.

3. Method according to claim 2, **characterised in that**, after the order has been forwarded by the interrogator, the reception centre (2) automatically transmits a debit signal to a payment service centre to which the interrogator subscribes, and said payment service centre debits the account of the interrogator by the sum corresponding to the order and credits the reception centre (2) therewith, the communication between the reception centre (2) and the payment service centre preferably being of a secure nature.

4. Method according to one of claims 2 and 3, **characterised in that** the order confirmation (5) also includes a cancellation telephone number (7), and **in that**, when the interrogator calls said cancellation telephone number (7) within a predetermined period of time and lets the telephone ring out a given number of times then hangs up, the reception centre (2) automatically cancels the order and transmits a cancellation message to the interrogator.

5. Installation for the interrogation and/or the transmission of orders and the payment of said orders, comprising a fixed or mobile apparatus (1) designed to receive data (3, 4, 5, 6, 7) via a telephone or data transmission network and comprising telephone calling means, as well as a reception centre (2) designed to recognise the telephone calls transmitted by said apparatus (1) to a call number of said reception centre (2), and to identify the telephone number of the caller and the number of rings before the caller interrupts his call, **characterised in that** said reception centre (2) includes means for automatically calling said apparatus (1), and for transmitting data (3, 4, 5, 6, 7) in the form of an audible or visible response to said apparatus, said response corresponding to the number of rings recognised.
